(19) Europäisches Patentamt
European Patent Office
Office européen des brevets

(11) **EP 3 915 776 A1**

(12) **EUROPEAN PATENT APPLICATION**
published in accordance with Art. 153(4) EPC

(43) Date of publication:
01.12.2021 Bulletin 2021/48

(21) Application number: 20744237.7

(22) Date of filing: 21.01.2020

(51) Int Cl.:
**B32B 5/18** (2006.01)      **B32B 5/22** (2006.01)
**C08J 9/28** (2006.01)      **C08J 9/30** (2006.01)
**C08J 5/16** (2006.01)

(86) International application number:
**PCT/JP2020/001986**

(87) International publication number:
**WO 2020/153376 (30.07.2020 Gazette 2020/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 21.01.2019 JP 2019007534

(71) Applicant: NITTO DENKO CORPORATION
Ibaraki-shi
Osaka 567-8680 (JP)

(72) Inventors:
• KOTAKE, Shinya
Ibaraki-shi, Osaka 567-8680 (JP)
• MATSUKUMA, Daisuke
Ibaraki-shi, Osaka 567-8680 (JP)
• FUJITA, Hiroyuki
Ibaraki-shi, Osaka 567-8680 (JP)

(74) Representative: Gill Jennings & Every LLP
The Broadgate Tower
20 Primrose Street
London EC2A 2ES (GB)

(54) **FILM**

(57) The purpose of the present invention is to provide a film which enables an oil to be held on a surface of an object over a long period and which makes it possible to reduce work costs and equipment construction costs. The film (1) of the present invention includes a base material (2) having a plurality of voids (21, 22) therein and an oil (3) retained in the voids (21, 22), wherein the voids (21) on one surface (S1) of the base material (2) have an average void diameter which is smaller than an average void diameter of the voids (22) present near a thickness-direction center of the base material (2).

*FIG. 1*

EP 3 915 776 A1

**Description**

TECHNICAL FIELD

The present invention relates to a film. More particularly, the present invention relates to a film for use as a surface-covering material for preventing snow, ice, or frost from adhering to a surface of an object, e.g., an airplane, a railroad car or locomotive, a motor vehicle, a wind-power generator, a dwelling house, a traffic signal, or a signboard.

BACKGROUND ART

The adhesion of ice (icing) to object surfaces or the adhesion of snowflakes (snow accretion) to object surfaces due to snowfall frequently causes damage and obstacles in various fields. For example, icing of an airplane, snow accretion to or freezing on lower portions of a locomotive, snow accretion to the head lamps of a motor vehicle, icing of the blades of a wind-power generator, icing of or freezing on the lights of a traffic signal, etc. can be obstacles to the service, operation, and safety of these. Meanwhile, icing of or freezing on the roof of a dwelling house, a signboard, etc. can be causative of damage to these structures or of human injuries due to the falling of snow masses.
In each industrial field, a treatment of the surface of such an object with an antifreeze has conventionally been performed as a measure for preventing the adhesion of snow or ice to the object surface.
For example, JP-A-6-158034 (Patent Document 1) discloses a deicing composition including an alkylene glycol ingredient, a thickening agent, a low-molecular-weight nonionic polyoxyethylene alkyl phenol ether surfactant, and an alkylarylsulfonate hydrotrop. According to this patent document, this composition has so high viscosity that it remains over a longer period and is useful as a deicing agent for airplane wings.
JP-A-59-92300 (Patent Document 2) proposes a device whereby the flow rate of an antifreeze being supplied to the front edges of the wings of an airplane is controlled with a microporous membrane for the purpose of preventing the wing front edges from icing.

CITATION LIST

PATENT LITERATURE

Patent Document 1: JP-A-6-158034

Patent Document 2: JP-A-59-92300

SUMMARY OF THE INVENTION

TECHNICAL PROBLEMS

However, the technique described in Patent Document 1 has a problem in that it is necessary to apply the deicing composition by spraying, etc. to a surface of an object to be protected and it is necessary that a loss of the composition due to the lapse of time should be offset by reapplication, resulting in an increase in work cost.
Meanwhile, the technique described in Patent Document 2 has a problem in that the antifreeze needs to be pressurized beforehand and it is costly to construct equipment therefor.
An object of the present invention is to provide a new means which can keep an antifreeze adherent to a surface of an object over a long period and which makes it possible to reduce work costs and equipment construction costs.

SOLUTION TO THE PROBLEMS

The present inventors diligently made investigations and, as a result, have discovered that those problems can be overcome with a film which includes a base material having voids differing in size between thickness-direction regions (layers) and in which an oil as an antifreeze is held by the base material, by disposing the film on a surface of an object. The present invention has been thus completed.
The present invention is characterized by the following (1) to (10).

(1) A film including a base material having a plurality of voids therein and an oil retained in the voids, wherein the voids present on one surface of the base material have an average void diameter which is smaller than an average void diameter of the voids present near a thickness-direction center of the base material.

(2) The film according to (1) above wherein the base material includes a first layer and a second layer, which has been superposed on one surface of the first layer.

(3) The film according to (2) above wherein the voids in the first layer have an average void diameter of 0.005-0.3 $\mu$m.

(4) The film according to (2) or (3) above wherein the voids in the second layer have an average void diameter of 30 $\mu$m or less.

(5) The film according to any one of (2) to (4) above wherein a ratio of an average void diameter of the voids in the first layer to an average void diameter of the voids in the second layer (average void diameter of the voids in the first layer / average void diameter of the voids in the second layer) is 0.0005 or larger but less than 1.

(6) The film according to any one of (2) to (5) above wherein the first layer has a void content of 10-80%.

(7) The film according to (1) above wherein the voids gradually increase in void diameter from one surface of the base material toward the surface of the base material lying on the reverse side from said surface.

(8) The film according to any one of (1) to (7) above wherein the oil is at least one member selected from the group consisting of alkylene glycols and mixtures thereof.

(9) The film according to any one of (1) to (8) above wherein the base material includes a polymeric material.

(10) The film according to any one of (1) to (9) above which is for preventing snow, ice, or frost from adhering to a surface of an object to be protected.

ADVANTAGEOUS EFFECTS OF THE INVENTION

Since the voids present on a surface of the base material have a smaller average void diameter than that of the voids present near the thickness-direction center of the base material, the film of the present invention can gradually release the oil from the surface of the base material. Consequently, by disposing the film of the present invention on a surface of an object to be protected, the object surface can be kept in an oil-coated state so that it is easy to remove snow, ice, or frost which has adhered thereto. Upon consumption of the oil present on the surface of the base material, the oil retained in inner voids of the base material is supplied toward the base-material surface side and bleeds to the base-material surface. The base-material surface can hence be kept in an oil-coated state, and the number of film replacements can be reduced. Therefore, a considerable reduction in work cost or equipment construction cost can be attained.

BRIEF DESCRIPTION OF DRAWINGS

[Fig. 1] Fig. 1 is a diagrammatic cross-sectional view illustrating the configuration of an embodiment (Example 1) of the film of the present invention.

[Fig. 2] Fig. 2 is a diagrammatic cross-sectional view illustrating the configurations of the films produced in Comparative Example 1 and Comparative Example 2.

[Fig. 3] Fig. 3 is graphs showing the results of a rainfall test performed in Test Example 1.

[Fig. 4] (a) to (c) of Fig. 4 are photographic diagrams showing the results of a snow accretion test performed in Test Example 2 for the films produced in Example 1 and Comparative Example 1; (a) of Fig. 4 is a diagram showing the films in the state of having been set in a test chamber, (b) of Fig. 4 is a diagram showing the films to which artificial snow has adhered, and (c) of Fig. 4 is a diagram showing the states of the films of 10 minutes after the artificial-snow adhesion.

[Fig. 5] (a) to (c) of Fig. 5 are photographic diagrams showing the results of a snow accretion test performed in Test Example 2 for the films produced in Comparative Example 2 and Comparative Example 3; (a) of Fig. 5 is a diagram showing the films in the state of having been set in a test chamber, (b) of Fig. 5 is a diagram showing the films to which artificial snow has adhered, and (c) of Fig. 5 is a diagram showing the states of the films of 5 minutes after the artificial-snow adhesion.

[Fig. 6] Fig. 6 is a diagram illustrating a test method used in Test Example 3.

[Fig. 7] Fig. 7 is a diagram illustrating a test method used in Test Example 4.

[Fig. 8] (a) to (d) of Fig. 8 are photographic diagrams showing the results of a snow accretion test performed in Test Example 4; (a) of Fig. 8 is diagrams showing the films produced in Example 1, Comparative Example 1, and Comparative Example 3 to which artificial snow has adhered, (b) of Fig. 8 is a diagram showing the state of the film of Example 1 of 30 minutes after the artificial-snow adhesion, and (c) and (d) of Figs. 8 are diagrams respectively showing the states of the films of Comparative Example 1 and Comparative Example 3 of 15 hours after the artificial-snow adhesion.

[Fig. 9] (a) to (g) of Fig. 9 are photographic diagrams showing the results of a frosting test performed in Test Example 5; (a) of Fig. 9 shows the states of films of before the experiment and (b) of Fig. 9, (c) of Fig. 9, (d) of Fig. 9, (e) of Fig. 9, (f) of Fig. 9, and (g) of Fig. 9 show the states of the films of 5 minutes, 10 minutes, 15 minutes, 20 minutes, 25 minutes, and 30 minutes, respectively, after the experiment.

DESCRIPTION OF EMBODIMENTS

Embodiments of the present invention are explained in more detail below, but the invention is not limited to the following embodiments in any way.

In this description, "mass" has the same meaning as "weight".

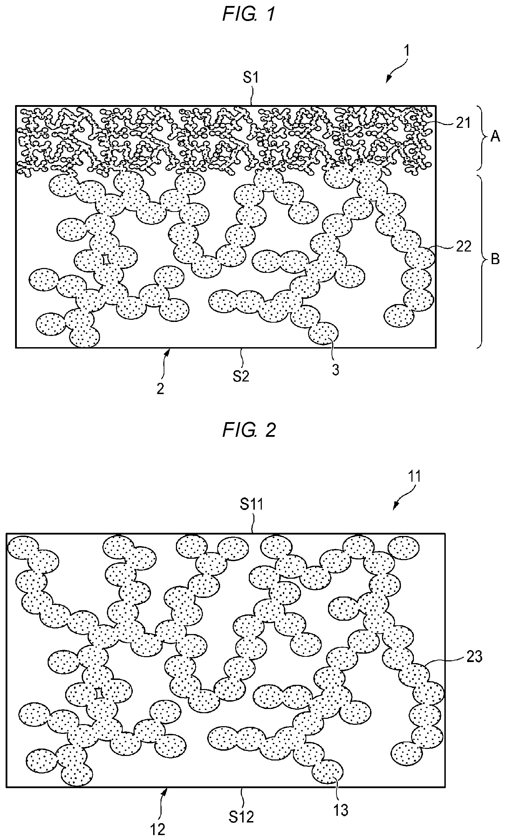

Fig. 1 is a diagrammatic cross-sectional view illustrating the configuration of one embodiment of the film of the present invention.

A film 1 according to this embodiment includes: a base material 2 having a plurality of voids 21, 22; and an oil 3 retained in the voids 21, 22.

(Base Material)

As Fig. 1 shows, the base material 2 is a porous base material that has a first surface S1 and a second surface S2 lying on the thickness-direction reverse side from the first surface S1, and that has a plurality of voids 21, 22 therein. In this embodiment, the voids 21 present on one surface (the first surface S1 in Fig. 1) of the base material 2 have an average void diameter smaller than an average void diameter of the voids 22 present near the thickness-direction center of the base material 2. The embodiment shown in Fig. 1 has first voids 21, which have a small void diameter, in a first layer A, which ranges from the first surface S1 to a given depth, and has second voids 22, which have a larger void diameter than the first voids 21, in a second layer B, which is the portion other than the first layer A and includes the vicinity of the thickness-direction center of the base material.

The voids 21, 22 may be independent of one another or may communicate with one another. It is, however, preferable that 20-100% of all the voids communicate with one another. It is also preferable that at least some of the voids 21, 22 constitute through holes extending from the first surface S1 to the second surface S2 of the base material 2. The oil 3, which will be described later, is retained in the voids 21, 22, and this oil 3 is releasable from the first surface S1 to the surface of the base material 2.

By configuring the base material 2 so that the average void diameter of the voids 21 present on one surface (first surface S1) of the base material 2 is smaller than the average void diameter of the voids 22 present near the thickness-direction center of the base material 2, the first layer A, which have voids having a small void diameter, is caused to serve to gradually release the oil 3 at a controlled release rate and the second layer B, which have voids having a large void diameter, is caused to serve to retain the oil 3 therein. The two layers (regions) have been thus made to have the respective functions. Namely, the first layer A is an oil gradual-release control layer which gradually releases the oil 3, and the second layer B is an oil-retaining layer which retains the oil 3 therein. By thus configuring the film, the oil can be caused to bleed little by little through the small voids present in the film surface and the oil retained in the large voids is supplied to the small voids. Consequently, the surface of an object to be protected, on which the film of this embodiment has been disposed, can be kept in an oil-coated state. As a result, a mass of snow or ice can be prevented from adhering to the surface of the object to be protected (hereinafter the prevention is referred to also as "snow accretion/icing prevention").

The void diameter of the first voids 21 in the first layer A may be suitably determined in accordance with the viscosity and weight-average molecular weight of the oil to be retained therein, etc. However, the average void diameter thereof is preferably 0.005-0.3 μm. In cases when the average particle diameter of the voids in the first layer A is 0.005 μm or larger, the oil 3 can be released at an appropriate rate and the surface of the film 1 can be always kept in an oil-coated state, making it possible to persistently obtain the snow accretion/icing prevention effect. Meanwhile, in cases when the average particle diameter of the voids in the first layer A is 0.3 μm or less, the oil can be prevented from being excessively released to the film surface and can be kept being moderately gradually released. The lower limit of the average void diameter of the voids in the first layer A is more preferably 0.01 μm or larger, still more preferably 0.02 μm or larger, and the upper limit thereof is more preferably 0.2 μm or less, still more preferably 0.1 μm or less.

The rate of oil release from voids can be controlled by regulating the void diameters of the voids in accordance with the Hagen-Poiseuille equation.

It is preferable that the first layer A has a void content of 10-80%. In cases when the void content of the first layer A is 10% or higher, it is easy to control the release rate of the oil 3. In cases when the void content thereof is 80% or less, the film 1 can retain satisfactory strength. The lower limit of the void content of the first layer A is more preferably 20% or higher, still more preferably 30% or higher, and the upper limit thereof is more preferably 70% or less, still more preferably 60% or less.

The void diameter of the second voids 22 in the second layer B can be suitably determined in accordance with the object to which the snow accretion/icing prevention effect is to be imparted, so long as the void diameter thereof is larger than the average void diameter of the first layer A. Since the average void diameter of the voids in the second layer B is larger than the average void diameter of the first layer A, the oil can smoothly flow from the second layer B to the first layer A. From the standpoint of maintaining the strength of the film 1, it is preferable that the voids of the second layer B have an average void diameter of 30 $\mu$m or less. The lower limit of the average void diameter of the voids in the second layer B is more preferably larger than 0.3 $\mu$m, still more preferably 0.5 $\mu$m or larger, especially preferably 1 $\mu$m or larger, and the upper limit thereof is preferably 20 $\mu$m or less, still more preferably 10 $\mu$m or less.

It is preferable that the second layer B has a void content of 10-80%. In cases when the void content of the second layer B is 10% or higher, this second layer B can retain a sufficient amount of oil and, hence, film-replacement intervals for an object to be protected can be prolonged to attain a cost reduction. In cases when the void content thereof is 80% or less, satisfactory film strength can be maintained. The lower limit of the void content of the second layer B is more preferably 20% or higher, still more preferably 30% or higher. The upper limit thereof is more preferably 70% or less, still more preferably 60% or less.

An average void diameter of an inner portion of the film is determined by examining the structure of a section of the material using a scanning electron microscope at a magnification of 3,000 times to measure the diameters of all the voids and calculating an average of the measured diameters. However, in the case where the void diameters cannot be measured by that method, the shape of a 1 $\mu$m $\times$ 1 $\mu$m area is examined using an atomic force microscope in the contact mode in such a manner that any recess having a depth of 10 nm or larger is regarded as a void and the diameters of all the voids are measured to calculate an average of the measured diameters, which is taken as the average void diameter.

An average void diameter of a surface of the film is determined by examining the structure of the surface with a scanning electron microscope from the direction of layer superposition at a magnification of 3,000 times to measure the diameters of all the voids and calculating an average of the measured diameters. However, in the case where the void diameters cannot be measured by that method, the shape of a 1 $\mu$m $\times$ 1 $\mu$m area is examined using an atomic force microscope in the contact mode in such a manner that any recess having a depth of 10 nm or larger is regarded as a void and the diameters of all the voids are measured to calculate an average of the measured diameters, which is taken as the average void diameter.

In this embodiment, it is preferable that the ratio of the average void diameter of the voids (first voids 21) in the first layer A to the average void diameter of the voids (second voids 22) in the second layer B (average void diameter of voids in the first layer / average void diameter of voids in the second layer) is 0.0005 or larger but less than 1. In cases when (average void diameter of voids in the first layer / average void diameter of voids in the second layer) is within that range, the rate of oil supply from the second layer B to the first layer A can be controlled to keep the oil being moderately gradually released. The lower limit of the (average void diameter of voids in the first layer / average void diameter of voids in the second layer) is more preferably 0.001 or larger, still more preferably 0.0015 or larger, and the upper limit thereof is more preferably 0.8 or less, still more preferably 0.6 or less.

In this embodiment, it is preferable that the base material 2 has an overall void content of 10-80%. In cases when the overall void content thereof is 10% or higher, this base material 2 can retain a sufficient amount of oil. In cases when the overall void content thereof is 80% or less, satisfactory film strength can be maintained. The lower limit of the overall void content is more preferably 20% or higher, still more preferably 30% or higher, and the upper limit thereof is more preferably 70% or less, still more preferably 60% or less.

In this embodiment, the first layer A and the second layer B each may include two or more layers (regions) as will be described later. It is preferable that the first layer A, which has voids having a small void diameter, has an overall depth which is at least 10% of the thickness of the base material 2. In cases when the overall depth of the first layer A is at least 10% of the thickness of the base material 2, control for gradual release can be attained while ensuring an oil retention amount. The lower limit of the overall depth of the first layer A is more preferably at least 15%, still more preferably at least 25%, of the thickness of the base material, and an upper limit thereof is preferably up to 65%, more preferably up to 50%, of the thickness of the base material.

The thickness of the base material 2 can be suitably changed in accordance with the size of the object to be protected, the amount of the oil to be retained, etc., and is not particularly limited. For example, the thickness thereof is preferably 10-10,000 $\mu$m, more preferably 50-1,000 $\mu$m, still more preferably 100-500 $\mu$m.

The base material can be constituted of a polymeric material, a ceramic material, a metallic material, etc.

Examples of the polymeric material include polyurethane resins, polyurethane-acrylic resins, rubber-based resins, vinyl chloride resins, polyester resins, silicone resins, elastomers, fluororesins, polyamide resins, polyolefin resins (e.g., polyethylene and polypropylene), and acrylic resins. Examples of the ceramic material include alumina, zirconia, titania, magnesia, spinel, calcia, cordierite, zeolite, mullite, ferrite, zinc oxide, silicon carbide, aluminum nitride, and silicon nitride. Examples of the metallic material include aluminum and stainless steel. One of these materials may be used alone, or two or more thereof may be used in combination. It is preferred to use polymeric materials among those from the standpoints of processability to base materials, adhesiveness to objects to be protected, material flexibility, etc.

The base material may contain any desired appropriate additives according to need. Examples of such additives include tackifiers, aging inhibitors, light stabilizers, ultraviolet absorbers, antioxidants, antistatic agents, lubricants, surfactants, fillers, and pigments.

Examples of methods for forming the first layer A and the second layer B in the base material 2 include: a method in which base materials having voids and differing in void diameter are produced beforehand and laminated to each other; and a method in which a heat-curable resin is mixed with an oil, the mixture is applied in a desired thickness, and the resin is cured at a high temperature (e.g., 50-150°C) (the first layer A and the second layer B are formed during the curing).

In the method in which the mixture of a heat-curable resin and an oil is used, the diameters of voids can be controlled by regulating a difference in solubility between the resin and the oil, mixing conditions, and the temperature for the curing treatment. When the mixture of a heat-curable resin and an oil is cured by heating, the curing of the heat-curable resin proceeds while allowing the oil dispersed near the surface to volatilize and this results in a decrease in the diameter of the oil present near the surface. As a result, layers (regions) having voids and differing in void diameter can be formed in the base material and the voids can retain the oil therein. Preferred of those is to utilize a difference in solubility between the resin and the oil, because it is easy to control the conditions over a wide range. The term "solubility" herein means solute concentration in a saturated solution in the case where the resin is regarded as a solvent (because the resin is liquid before being heat-cured) and the oil is regarded as a solute. Mixing a resin with an oil gives a solution having a sea-island structure in which the resin is the sea and the oil is the islands. In this operation, the lower the solubility between the resin and the oil, the larger the dispersed islands (oil) in the sea-island structure. Upon curing, this solution gives a porous membrane in which the sizes of the islands (oil) are the void diameters of the porous membrane. Thus, void-diameter control of the base material is possible with the solubility between the resin and the oil.

In the base material 2 shown in Fig. 1, the voids in the first layer A have approximately the same void size and the voids in the second layer B have approximately the same void size. However, the present invention is not limited to this embodiment. A configuration is possible in which the first layer A or the second layer B includes two or more layers arranged along the thickness direction which have voids and differ in void diameter. So long as the average void diameter of the voids near the thickness-direction center of the base material is larger than the average void diameter of the voids present in the surface of the base material, the number of layers and the thickness of each layer can be suitably regulated. The base material may have been configured so that the diameter of the voids gradually decreases from the second surface S2 toward the first surface S1, or may have been configured so that the voids present nearer to both surfaces S1 and S2 of the base material have smaller void diameters than the voids present near the thickness-direction center of the base material 2. By configuring the base material 2 so that the void diameters change in stages or continuously (gradation), the oil retained in the voids can be made to flow smoothly.

In cases when the void diameters change in stages or continuously in the base material 2 and when, for example, the first layer A has a depth which is 50% of the thickness of the base material and the second layer B has a depth which is the remaining 50% of the thickness of the base material, then this base material can include the following layers from the first surface S1 side: 0-30% layer having an average void diameter of 0.005-0.01 $\mu$m, 0-40% layer having an average void diameter of larger than 0.01 $\mu$m but not larger than 0.1 $\mu$m, 0-50% layer having an average void diameter of larger than 0.1 $\mu$m but not larger than 0.3 $\mu$m, 0-30% layer having an average void diameter of larger than 0.3 $\mu$m but not larger than 1 $\mu$m, 0-40% layer having an average void diameter of larger than 1 $\mu$m but not larger than 10 $\mu$m, and 0-50% layer having an average void diameter of larger than 10 $\mu$m but not larger than 30 $\mu$m.

(Oil)

The oil 3 is retained in the voids 21, 22 of the base material 2. The oil includes an antifreeze ingredient as a main component for preventing a mass of snow, ice, or frost from freezing. The oil in the voids of the base material is in a gel state due to the thixotropic properties of the antifreeze ingredient and is reliably retained therein. The oil is liquefied by fluctuations in wind pressure, impacts by scattered substances, vibrations of the object being protected, etc., and bleeds to the surface of the film by the pump effect. Thus, the snow or ice which has adhered can be made to fall easily. The term "main component" means that the ingredient is contained in the oil in an amount of 10 mass% or larger. The content thereof is more preferably 40 mass% or larger.

Examples of the antifreeze ingredient include a hydrophilic antifreeze ingredient and a hydrophobic antifreeze ingredient.

As the hydrophilic antifreeze ingredient, use can be made of one which, by the freezing point depression function, lowers the melting point of the water that is the component of snow masses or ice. By using the hydrophilic antifreeze ingredient which thus lowers the melting point of water, the snow mass or ice adherent to the surface of the film is melted. The film thus exhibits the snow accretion/icing prevention effect on objects to be protected by providing the film thereto.

Dissolving a nonvolatile solute in a solvent gives a solution which has a solidifying point Tf lower than that of the pure solvent. In cases when the molar solidifying point depression constant of a solvent is expressed by Kf, the solidifying point depression (Δt) of a dilute solution is shown by the following relationship.

$$\Delta t = Kf \times (w/M) \times (1000/W)$$

(In the expression, Δt represents the solidifying point depression, Kf represents the molar solidifying point depression constant (K) (1.85 K·kg/mol in the case of water), w represents the mass (g) of the antifreeze, M represents the molecular weight of the antifreeze, and W represents the mass (g) of the water.)

For example, in the case where 10 mol (620.7 g) of ethylene glycol is dissolved in 1 mL of water, the solidifying point of the water declines to -18.53°C in accordance with the molar solidifying point depression constant (Kf/K) of water (1.853). Namely, it can be seen that the water does not freeze down to about -18°C.

The hydrophilic antifreeze ingredient is not particularly limited and can be suitably selected from known ingredients. Examples thereof include alkylene glycols and mixtures thereof. Specific examples include ethylene glycol, propylene glycol, diethylene glycol, dipropylene glycol, glycerol, diglycerol, and mixtures of these. One of these may be used alone, or a mixture of two or more thereof may be used.

As the hydrophobic antifreeze ingredient, use can be made of any desired oily substance having hydrophobicity, moderate viscosity, a low solidifying point, and a high flash point. The film according to this embodiment has been greatly reduced in adhesion between the surface of the film and snow, ice, or frost, by the water repellency of the hydrophobic antifreeze ingredient retained in the base material, and exhibits the snow accretion/icing prevention effect on objects to be protected by providing the film thereto.

Examples of the hydrophobic antifreeze ingredient include oily liquids based on a mineral oil, synthetic oil, natural oil, etc. As the mineral-oil-based liquid, use can be made of the following products of Nippon Oil Co., Ltd. available under the trade manes of #3 Solvent, #4 Solvent, Nisseki #1, Nisseki #2, Spindle Oil, Separate Spindle Oil, White Spindle Oil, Special Spindle Oil, B Machine Oil, C Machine Oil, Machine Oil, Agricultural Machine Oil, Nisseki Nouyaku Oil, HI-WHITE, Nisseki Super Oil, AF SOLVENT, etc. Examples of the synthetic-oil-based liquid include polyolefins derived from isoparaffins, ethylene, propylene, butene, isobutene, α-olefins, etc., polyisoprenoids such as synthetic squalane, naphthenes, alkylbenzenes, diarylalkanes, alkylnaphthalenes, alkylbiphenyls, and silicone oils, and usable commercial products include ones of Nippon Oil Co., Ltd. available under the trade manes of ISOLAN P, ISOLAN S, ISOLAN R, and Nisseki Naphthesol. Usable as the natural-oil-based liquid is squalene or squalane obtained from abyssal-shark liver oil or olive oil as a raw material.

The antifreeze ingredient has a weight-average molecular weight of, for example, preferably 20-5,000, more preferably 40-1,000, still more preferably 60-200. In case where the weight-average molecular weight of the antifreeze ingredient is too low, this antifreeze ingredient is prone to volatilize and tends to result in reduced persistence. In case where the weight-average molecular weight of the antifreeze ingredient is too high, this leads to too high a viscosity of the oil and gradual release thereof from the voids of the base material is difficult. Consequently, the weight-average molecular weight of the antifreeze ingredient is preferably within that range.

The oil can contain a thickening agent (gellant) for imparting consistency and thixotropic properties necessary for enabling the antifreeze ingredient to be retained on the surface of an object to be protected and in the voids of the base material. Examples of the thickening agent include poly(acrylic acid) and salts thereof such as poly(acrylic acid), poly(sodium acrylate) and poly(potassium acrylate), cellulose derivatives such as carboxymethyl cellulose, hydroxyethyl cellulose, and hydroxypropyl methyl cellulose, 12-hydroxystearic acid, salts of fatty acids with metals such as calcium, lithium, and aluminum, dibenzylidene sorbitol, amino acid derivatives such as the amides and ester amine salts of N-amylamino acids, and dextrin fatty acid esters. One of these may be used alone, or two or more thereof may be used in combination.

The amount of the thickening agent to be used is not particularly limited. Usually, however, the amount thereof is preferably 0.2-0.8 mass%, more preferably 0.25-0.5 mass%, based on the oil.

Natural rubber, an SBR, polyisobutylene, a natural wax, a petroleum wax, a silicone, or the like can be incorporated into the oil according to this embodiment. It is also possible to suitably add an antioxidant, flame retardant, pigment, etc.

The viscosity of the oil is, for example, preferably 0.1-10,000 mPa·s, more preferably 1-5,000 mPa·s, still more preferably 20-1,500 mPa·s. In cases when the viscosity of the oil is 0.1 mPa·s or higher, the oil can be inhibited from being excessively released. Meanwhile, the viscosity of the oil is preferably 10,000 mPa·s or less because too high viscosities thereof exceeding 10,000 mPa·s make it difficult to gradually release the oil from the voids of the base material.

From the standpoints of inhibiting the solidification or growth of snow or ice which has adhered to objects to be protected and preventing the oil from catching fire from a spark caused by braking, etc., it is preferred to employ an oil having a lower solidifying point and a higher flash point. From the standpoint of profitability, however, use is made of an oil having a solidifying point of -10°C or lower, preferably -20°C or lower, and a flash point of 100°C or higher, preferably 120°C or higher.

Examples of methods for introducing the oil into the voids 21, 22 of the base material 2 include: a method in which a heat-curable resin is mixed with the oil, the mixture is applied in a desired thickness, and the resin is thereafter cured at a high temperature (e.g., 50-150°C) (layers differing in void size and stacked along the thickness direction are formed during the curing); a method in which a porous base material is immersed in the oil; and a method in which the oil is applied to a base material by spraying or with a brush.

(Support)

A support can be provided to the surface (second surface S2) of the film according to this embodiment on the reverse side from the surface (first surface S1) from which the oil is to be released.

The material of the support is not particularly limited. Examples thereof include polyurethane resins, polyurethane-acrylic resins, rubber-based resins, vinyl chloride resins, polyester resins, silicone resins, elastomers, fluoroesins, polyamide resins, polyolefin resins (e.g., polyethylene and polypropylene), acrylic resins, and ionomer resins.

The support may contain any desired appropriate additives according to need. Examples of such additives include tackifiers, aging inhibitors, light stabilizers, ultraviolet absorbers, antioxidants, antistatic agents, lubricants, surfactants, fillers, and pigments.

A pressure-sensitive adhesive layer may be disposed between the film of the present invention and the support. Examples of the material of such a pressure-sensitive adhesive layer include an acrylic-resin-based pressure-sensitive adhesive, an epoxy-resin-based pressure sensitive adhesive, an amino-resin-based pressure-sensitive adhesive, a pressure-sensitive adhesive based on a vinyl resin (e.g., a vinyl-acetate-based polymer), a pressure-sensitive adhesive based on a curing type acrylic resin, and a silicone-resin-based pressure-sensitive adhesive. The pressure-sensitive adhesive layer may be constituted of only one material or of two or more materials.

The film of the present invention can be used as a surface-covering material. By disposing the film of the present invention on a surface of an object to be protected, a mass of snow, ice, or frost can be prevented from adhering the surface of the object (snow accretion/icing prevention function can be imparted to the object).

EXAMPLES

The present invention is explained below in more detail by reference to Example and Comparative Examples, but the present invention is not limited to the following.

(Example 1)

A film 1 having the configuration shown in Fig. 1, which included a first layer A and a second layer B, was produced.

Dimethylpolysiloxane was used as a material for constituting a base material 2, and ethylene glycol (concentration: 100 mass%) was used as an oil 3. Ten grams of dimethylpolysiloxane was mixed with 9 g of ethylene glycol. This liquid mixture was stirred with a spatula at a speed of about 120 rpm for 120 seconds and then further stirred with a planetary centrifugal mixer (CONDITIONING MIXER AR-250, manufactured by Thinky Corp.) for 30 seconds. This stirring step was repeated four times. The resultant mixture was applied to a support (polyurethane film (ESMER URS PX-II #10) manufactured by Nihon Matai Co., Ltd.) and then heated at 100°C for 0.167 hours (about 10 minutes) using a thermostatic chamber (trade name "SPHH-201", manufactured by ESPEC) to heat-cure the dimethylpolysiloxane. Thus, a film 1 having a thickness of 250 μm was produced.

Thereafter, inner portions and a surface of the film were examined for average void diameter in the following manners.

The average void diameter of an inner portion of the film was determined by examining the structure of a section of the material using a scanning electron microscope (SU-1500, manufactured by Hitachi High-Technologies Corp.) at a magnification of 3,000 times to measure the diameters of all the voids and calculating an average of the measured diameters.

The average void diameter of the surface of the film was determined by examining the shape of a 1 μm × 1 μm area in the film surface using an atomic force microscope (MFP-3D-SA, manufactured by Oxford Instrumental) in the contact mode in such a manner that any recess having a depth of 10 nm or larger was regarded as a void and the diameters of all the voids were measured, and calculating an average of the measured diameters, which was taken as the average void diameter.

As a result, the following were found: the voids on the film surface on the reverse side from the support had an average void diameter of about 0.05 μm; the voids in the first layer A had an average void diameter of about 1.5 μm; the voids in a film-thickness-direction center (distance from the surface of the first layer A to the center / distance from the surface of the second layer B to the center=1) had an average void diameter of about 3.0 $\mu$m; and the voids in the second layer B had an average void diameter of about 3.0 $\mu$m.

The first layer A had a thickness of 50 $\mu$m and the second layer B had a thickness of 200 $\mu$m. The content of ethylene glycol was 0.0100 g/cm$^2$.

(Comparative Example 1)

A film 11 having the configuration shown in Fig. 2, which had voids 23 of a single size, was produced.

Dimethylpolysiloxane was used as a material for constituting a base material 12, and ethylene glycol (concentration: 100 mass%) was used as an oil 13. Ten grams of dimethylpolysiloxane was mixed with 9 g of ethylene glycol. This liquid mixture was stirred with a spatula at a speed of about 120 rpm for 120 seconds and then further stirred with a planetary centrifugal mixer (CONDITIONING MIXER AR-250, manufactured by Thinky Corp.) for 30 seconds. This stirring step was repeated four times. The resultant mixture was applied to a support (polyurethane film (ESMER URS PX-II #10) manufactured by Nihon Matai Co., Ltd.). Thereafter, using a Dry Keeper Auto desiccator ("Dry Keeper Auto-A Type" (trade name), manufactured by Sanplatec Corp., the coated support was allowed to stand for 24 hours in a room-temperature environment having a humidity of 30-40% RH to cure the dimethylpolysiloxane. Thus, a film 11 having a thickness of 250 $\mu$m was produced.

The obtained film of Comparative Example 1 had voids 23 having an average void diameter of about 2.0 $\mu$m and had an ethylene glycol content of 0.0125 g/cm$^2$.

(Comparative Example 2)

A film 11 having the configuration shown in Fig. 2, which had voids 23 of a single size, was produced.

Dimethylpolysiloxane was used as a material for constituting a base material 12, and glycerin (concentration: 100 mass%) was used as an oil 13. Ten grams of dimethylpolysiloxane was mixed with 9 g of glycerin. This liquid mixture was stirred with a spatula at a speed of about 120 rpm for 120 seconds and then further stirred with a planetary centrifugal mixer (CONDITIONING MIXER AR-250, manufactured by Thinky Corp.) for 30 seconds. This stirring step was repeated four times. The resultant mixture was applied to a support (polyurethane film (ESMER URS PX-II #10) manufactured by Nihon Matai Co., Ltd.) and then heated at 100°C for 0.167 hours (about 10 minutes) using a thermostatic chamber (trade name "SPHH-201", manufactured by ESPEC) to heat-cure the dimethylpolysiloxane. Thus, a film having a thickness of 250 $\mu$m was produced.

The obtained film of Comparative Example 2 had voids 23 having an average void diameter of about 4.5 $\mu$m and had a glycerin content of 0.0136 g/cm$^2$.

(Comparative Example 3)

Using dimethylpolysiloxane as a material for constituting a base material, a film was produced in the same manner as in Example 1 except that no antifreeze ingredient was incorporated.

<Test Example 1: Rainfall Test>

The films of Example 1, Comparative Example 1, and Comparative Example 2 were each set on a rainfall device ("Xenon Weatherometer X25" (trade name), manufactured by Suga Test Instruments Co., Ltd.) so that the first surface S1 or S11, which was the oil release surface, faced upward. Subsequently, the film was exposed to an artificial rainfall (precipitation, 37 mm/hr) for 180 minutes in an environment having a temperature of 25°C and a lamp output of 0 W.

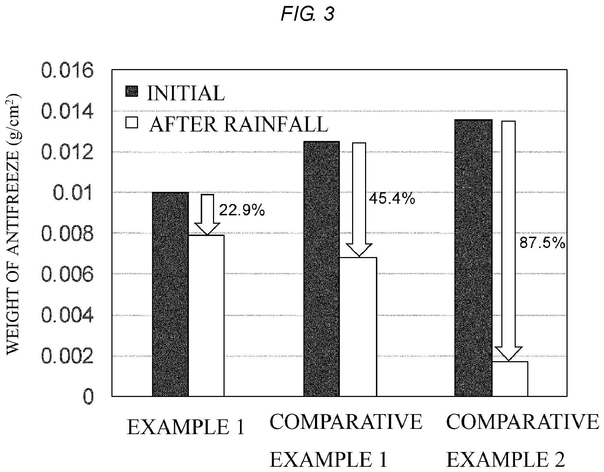

The film which had undergone the rainfall was analyzed by gas chromatography to determine the amount of the oil remaining therein. The results thereof are shown in Fig. 3.

In Example 1, the ethylene glycol content had been 0.0100 g/cm$^2$ before initiation of the test and was 0.0079 g/cm$^2$ after the rainfall, the ethylene glycol loss being 22.9%. In contrast, in Comparative Example 1, the ethylene glycol content had been 0.0125 g/cm$^2$ before initiation of the test and was 0.0068 g/cm$^2$ after the rainfall, the ethylene glycol loss being 45.4%. In Comparative Example 2, the glycerin content had been 0.0136 g/cm$^2$ before initiation of the test and was 0.0017 g/cm$^2$ after the rainfall, the glycerin loss being 87.5%. It was understood from these results that the film of Example 1 was more effective in inhibiting the antifreeze from flowing out than Comparative Examples 1 and 2 and was hence able to contain the antifreeze therein over a long period and to retain a long-lasting snow accretion/icing prevention effect.

<Test Example 2: Snow Accretion Experiment>

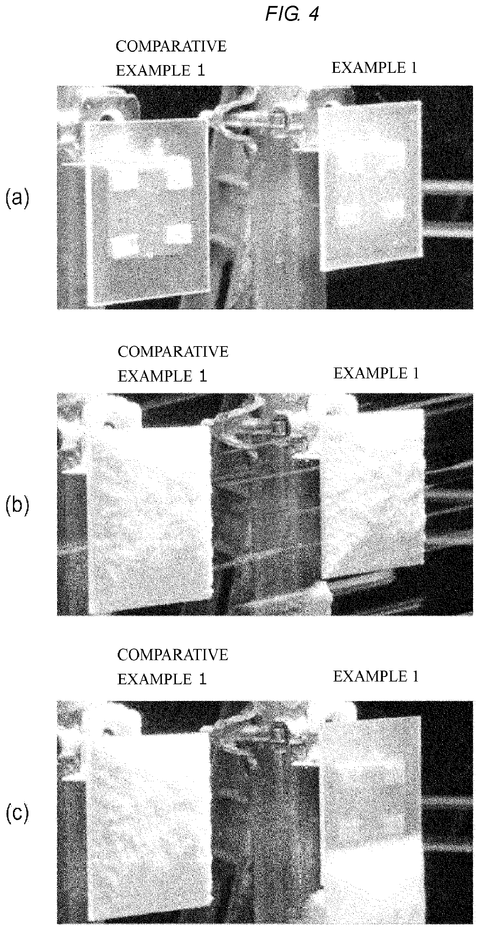

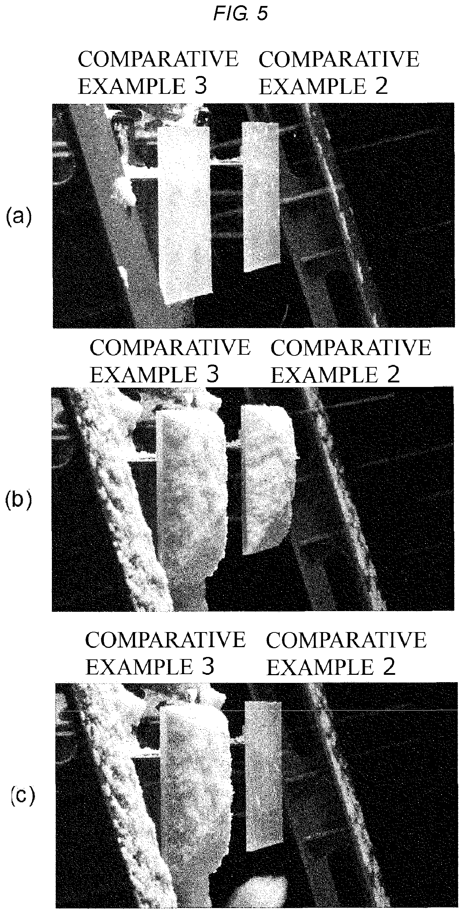

As (a) of Fig. 4 and (a) of Fig. 5 show, the films of Example 1, Comparative Example 1, Comparative Example 2, and Comparative Example 3 were each bonded to an acrylic plate disposed perpendicularly to the floor, so that the first surface S1 or S11, which was the antifreeze release surface, was exposed, and this assembly was disposed in a test chamber. The environment temperature and the wind velocity in the test chamber were set at 1°C and 10 m/sec, respectively, and artificial snow was blown against the antifreeze release surface S1 or S11 for 5 minutes. As a result, a mass of snow having a thickness of about 2 cm adhered to each antifreeze release surface S1 or S11 as shown in (b) of Fig. 4 and (b) of Fig. 5.

Thereafter, the time period to a fall of the snow mass was measured.

As shown in (c) of Fig. 4, the artificial snow which had adhered to the film of Example 1 fell due to its own weight at 10 minutes thereafter. Meanwhile, the artificial snow which had adhered to the film of Comparative Example 1 fell at 12 minutes thereafter. Furthermore, as shown in (c) of Fig. 5, the artificial snow which had adhered to the film of Comparative Example 2 fell at 5 minutes thereafter. The artificial snow which had adhered to the film of Comparative Example 3 remained adherent even after 15 hours or longer.

It was thus ascertained that in the film of Example 1, ethylene glycol was gradually released from the minute voids of the first layer and, as the consumption of ethylene glycol proceeded, the ethylene glycol retained in the voids of the second layer was supplied to the voids of the first layer, thereby keeping ethylene glycol being gradually released to the surface of the film. Incidentally, it is thought that in the film of Comparative Example 2, the oil was released from the surface in a large amount because of the large void diameter to cause the snow mass adherent to the vertical surface to fall.

<Test Example 3: Ice Adhesion Strength Test>

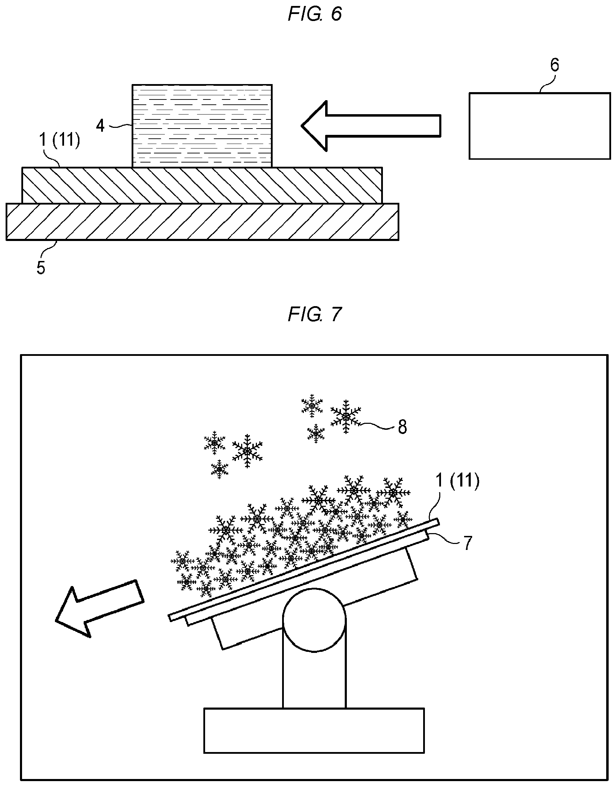

As shown in Fig. 6, the films 1, 11 of Example 1, Comparative Example 1, Comparative Example 2, and Comparative Example 3 were each bonded to a stainless-steel plate 5 disposed in parallel with the floor, so that the first surface S1 or S11, which was the antifreeze release surface, faced upward, and a cylindrical ice block 4 having an adhesion area of 4.9 $cm^2$ and a thickness of 1.0 cm was caused to adhere thereto. The environment temperature in the test chamber was set at -20°C and at 1 hour after the adhesion of the ice block 4, the ice block 4 was pushed with a load cell 6 (DPU-50, manufactured by Imada Co., Ltd.; attachment jig, Type AA-4) at a speed of 0.1 mm/sec from a direction parallel with the floor. The loads thus applied over a period of 30 seconds were measured with a force gauge (ZTS-50N, manufactured by Imada Co., Ltd.). A maximum load measured was divided by the adhesion area of 4.9 $cm^2$ and this quotient was recorded as an ice adhesion strength. The test was conducted three times, and an average for these was determined.

The films of Example 1, Comparative Example 1, and Comparative Example 2 had an ice adhesion strength of 0.06 $N/cm^2$. The film of Comparative Example 3 had an ice adhesion strength of 6.29 $N/cm^2$.

<Test Example 4: Snow Accretion Experiment>

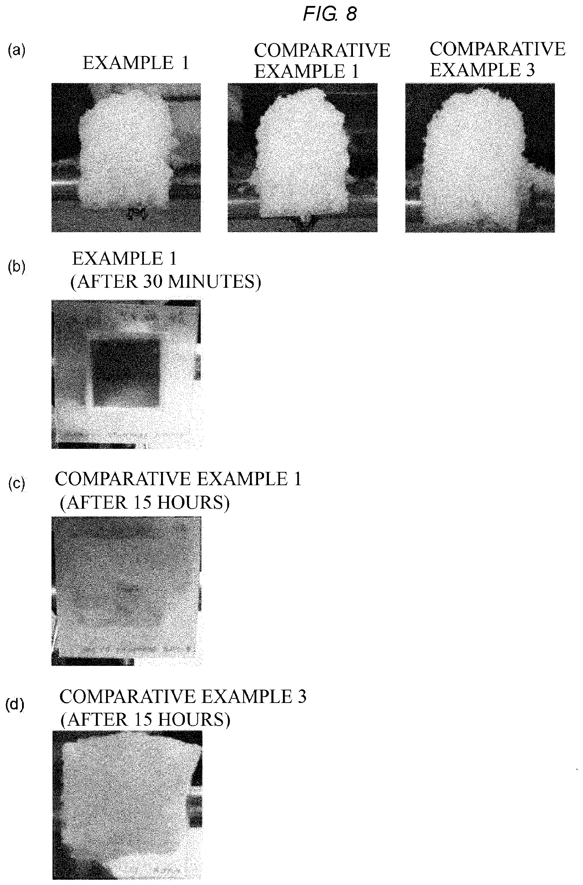

As Fig. 7 shows, the films 1, 11 of Example 1, Comparative Example 1, and Comparative Example 3 were each bonded to an acrylic plate 7 disposed obliquely at an angle of 45° with the floor so that the first surface S1 or S11, which was the ethylene glycol release surface, faced upward, and this assembly was disposed in a test chamber. The environment temperature in the test chamber was set at —10°C and artificial snow 8 was caused to fall on the antifreeze release surface S1 or S11 from above for 4 hours. As a result, a mass of snow having a thickness of about 10 cm adhered to the antifreeze release surface S1 or S11 as shown in (a) of Fig. 8.

Thereafter, the time period to a fall of the snow mass was measured.

As shown in (b) of Fig. 8, the artificial snow which had adhered to the film of Example 1 wholly fell due to its own weight at 30 minutes thereafter. However, the artificial snow which had adhered to the films of Comparative Example 1 and Comparative Example 3 remained adherent even after 15 hours as shown in (c) of Fig. 8 and (d) of Fig. 8.

It was thus ascertained that in the film of Example 1, the minute voids of the first layer not only render the gradual release of ethylene glycol possible but also inhibit the ethylene glycol from being excessively consumed, thereby maintaining the snow accretion/icing prevention effect over a long period.

Table 1 below shows the average void diameters of Example 1 and Comparative Examples 1 to 3, the antifreeze losses determined in Test Example 1, the time periods to snow-mass falling measured in Test Example 2, the ice adhesion strengths measured in Test Example 3, and the results of Test Example 4.

[Table 1]

| | Average void Diameter (μm) | | Loss of antifreeze (%) (Test Example 1) | Time period to snow-mass falling (Test Example 2) | Ice adhesion strength (N/cm²) (Test Example 3) | | | | Snow accretion test (Text Example 4) |
|---|---|---|---|---|---|---|---|---|---|
| | | | | | Frist | Second | Third | Average | |
| Example 1 | First layer | 1.5 | 22.9 | 10 minutes to snow-mass falling | 0.06 | 0.07 | 0.04 | 0.06 | The snow wholly fell due to own weight at 30 minutes after snow-mass adhesion |
| | Second layer | 3.0 | | | | | | | |
| | Surface | 0.1 | | | | | | | |
| | Center | 3.0 | | | | | | | |
| Comparative Example 1 | 2.0 | | 45.4 | 12 minutes to snow-mass falling | 0.07 | 0.06 | 0.06 | 0.06 | The snow remained adherent even at 15 hours after snow-mass adhesion |
| Comparative Example 2 | 4.5 | | 87.5 | 5 minutes to snow-mass falling | 0.11 | 0.03 | 0.03 | 0.06 | - |
| Comparative Example 3 | No voids | | - | Remained adherent even after 15 hours | 6.35 | 6.73 | 5.79 | 6.29 | The snow remained adherent even at 15 hours after snow-mass adhesion |

<Test Example 5: Frosting Experiment>

The films of Example 1, Comparative Example 2, and Comparative Example 3 which had been cut into 2×7 cm were each bonded to an aluminum plate, and this assembly was disposed on a heating/cooling Peltier temperature stage (VPE35-12-40S, manufactured by VICS Co.). The stage temperature was set at 20°C and the assembly was allowed to stand still for 10 minutes. Thereafter, the stage was cooled to -8°C to measure a time period to the occurrence of frosting on the front surface of the film. The examination was made in an environment having a room temperature of 24°C and a humidity of 49% RH

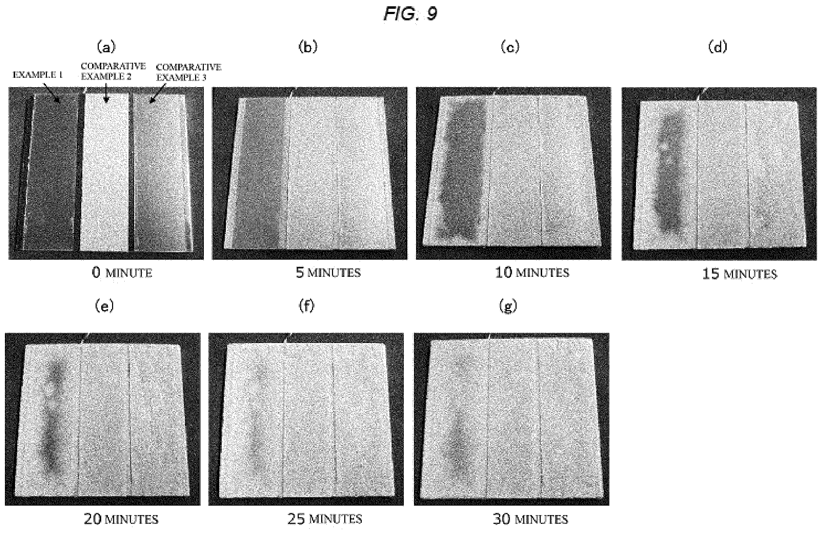

The results are shown in Fig. 9. As (a) of Fig. 9 shows, the aluminum plate having the film of Example 1 bonded thereto, the aluminum plate having the film of Comparative Example 2 bonded thereto, and the aluminum plate having the film of Comparative Example 3 bonded thereto were arranged in this order from the left-hand side; the same applies in (b) to (g) of Fig. 9.

In the examination performed under those conditions, the frosting prevention effects can be compared in terms of prolongation of time period to frosting. The time period to frosting in Example 1 was 30 minutes (see (g) of Fig. 9), that in Comparative Example 2 was 15 minutes (see (d) of Fig. 9), and that in Comparative Example 3 was 25 minutes (see (f) of Fig. 9). Thus, the frosting inhibition effect of Example 1 was demonstrated.

While the invention has been described in detail and with reference to specific embodiments thereof, it will be apparent to one skilled in the art that various changes and modifications can be made therein without departing from the spirit and scope thereof. This application is based on a Japanese patent application filed on January 21, 2019 (Application No. 2019-007534), the contents thereof being incorporated herein by reference.

INDUSTRIAL APPLICABILITY

The film of the present invention is useful in preventing snow, ice, or frost from adhering to a surface of an airplane, railroad car or locomotive, motor vehicle, wind-power generator, dwelling house, traffic signal, signboard, etc.

REFERENCE SIGNS LIST

| 1, 11 | Film |
| 2, 12 | Base material |
| 3, 13 | Oil |
| 4 | Ice block |
| 5 | Stainless-steel plate |
| 6 | Load cell |
| 7 | Acrylic plate |
| 8 | Artificial snow |
| 21 | First voids |
| 22 | Second voids |
| 23 | Voids |
| A | First layer |
| B | Second layer |
| S1, S11 | First surface |
| S2, S12 | Second surface |

**Claims**

1. A film comprising a base material having a plurality of voids therein and an oil retained in the voids, wherein the voids present on one surface of the base material have an average void diameter which is smaller than an average void diameter of the voids present near a thickness-direction center of the base material.

2. The film according to claim 1, wherein the base material comprises a first layer and a second layer superposed on one surface of the first layer.

3. The film according to claim 2, wherein the voids in the first layer have an average void diameter of 0.005-0.3 $\mu$m.

4. The film according to claim 2 or 3, wherein the voids in the second layer have an average void diameter of 30 $\mu$m or less.

5. The film according to any one of claims 2 to 4, wherein a ratio of an average void diameter of the voids in the first layer to an average void diameter of the voids in the second layer (average void diameter of the voids in the first layer / average void diameter of the voids in the second layer) is 0.0005 or larger but less than 1.

6. The film according to any one of claims 2 to 5, wherein the first layer has a void content of 10-80%.

7. The film according to claim 1, wherein the voids gradually increase in void diameter from one surface of the base material toward the surface of the base material lying on the reverse side from said surface.

8. The film according to any one of claims 1 to 7, wherein the oil is at least one member selected from the group consisting of alkylene glycols and mixtures thereof.

9. The film according to any one of claims 1 to 8, wherein the base material comprises a polymeric material.

10. The film according to any one of claims 1 to 9, which is for preventing snow, ice, or frost from adhering to a surface of an object to be protected.

*FIG. 1*

*FIG. 2*

FIG. 3

*FIG. 4*

COMPARATIVE
EXAMPLE 1                    EXAMPLE 1

(a)

COMPARATIVE
EXAMPLE 1                    EXAMPLE 1

(b)

COMPARATIVE
EXAMPLE 1                    EXAMPLE 1

(c)

## FIG. 5

COMPARATIVE COMPARATIVE
EXAMPLE 3 EXAMPLE 2

(a)

COMPARATIVE COMPARATIVE
EXAMPLE 3 EXAMPLE 2

(b)

COMPARATIVE COMPARATIVE
EXAMPLE 3 EXAMPLE 2

(c)

## FIG. 6

## FIG. 7

## FIG. 8

(a)

EXAMPLE 1 COMPARATIVE EXAMPLE 1 COMPARATIVE EXAMPLE 3

(b) EXAMPLE 1
(AFTER 30 MINUTES)

(c) COMPARATIVE EXAMPLE 1
(AFTER 15 HOURS)

(d) COMPARATIVE EXAMPLE 3
(AFTER 15 HOURS)

FIG. 9

| (a) | (b) | (c) | (d) |
| --- | --- | --- | --- |
| EXAMPLE 1 · COMPARATIVE EXAMPLE 2 · COMPARATIVE EXAMPLE 3 | | | |
| 0 MINUTE | 5 MINUTES | 10 MINUTES | 15 MINUTES |

| (e) | (f) | (g) |
| --- | --- | --- |
| 20 MINUTES | 25 MINUTES | 30 MINUTES |

## INTERNATIONAL SEARCH REPORT

International application No.

PCT/JP2020/001986

### A. CLASSIFICATION OF SUBJECT MATTER

B32B 5/18(2006.01)i; B32B 5/22(2006.01)i; C08J 9/28(2006.01)i; C08J 9/30(2006.01)i; C08J 5/16(2006.01)i
FI: C08J5/16 CER; C08J9/28 102; C08J9/30 CEZ; B32B5/22; B32B5/18
According to International Patent Classification (IPC) or to both national classification and IPC

### B. FIELDS SEARCHED

Minimum documentation searched (classification system followed by classification symbols)
C08J5/00-5/02; 5/12-5/22; C08J9/00-9/42; B32B1/00-43/00

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 5-229402 A (RAILWAY TECHNICAL RESEARCH INSTITUTE) 07.09.1993 (1993-09-07) claim 1, paragraphs [0005]-[0006], [0008]-[0011], [0016], [0018]-[0023], [0025], fig. 1 | 1-7, 9-10<br>8 |
| Y<br>A | JP 8-141067 A (OLYMPUS OPTICAL CO., LTD.) 04.06.1996 (1996-06-04) claims 1-4, paragraph [0023], fig. 1 | 1-6, 9-10<br>7-8 |
| Y<br>A | JP 4-224511 A (OLYMPUS OPTICAL CO., LTD.) 13.08.1992 (1992-08-13) claim 1, paragraphs [0001], [0005]-[0006], [0008], [0020], fig. 1 | 1-6, 9-10<br>7-8 |
| Y<br>A | JP 2-289333 A (MITSUBISHI ELECTRIC HOME APPILANCE CO.) 29.11.1990 (1990-11-29) claims 1, 4, 7, page 1, lower right column, lines 14-17, page 7, upper left column, line 7 to lower left column, line 4 | 1, 7, 9-10<br>2-6, 8 |

☒ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>02 April 2020 (02.04.2020) | Date of mailing of the international search report<br>14 April 2020 (14.04.2020) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2020/001986 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2002-23541 A (MINOLTA CO., LTD.) 23.01.2002 (2002-01-23) claims 1-3, paragraphs [0001], [0007], [0033]-[0035], fig. 6 | 1, 7, 9-10<br>2-6, 8 |

Form PCT/ISA/210 (continuation of second sheet) (January 2015)

**INTERNATIONAL SEARCH REPORT**
Information on patent family members

International application No.

PCT/JP2020/001986

| Patent Documents referred in the Report | Publication Date | Patent Family | Publication Date |
|---|---|---|---|
| JP 5-229402 A | 07 Sep. 1993 | (Family: none) | |
| JP 8-141067 A | 04 Jun. 1996 | (Family: none) | |
| JP 4-224511 A | 13 Aug. 1992 | (Family: none) | |
| JP 2-289333 A | 29 Nov. 1990 | US 5108833 A claims 1, 2, 6, column 15, line 23 to column 16, line 5 EP 578272 A1 | |
| JP 2002-23541 A | 23 Jan. 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6158034 A
- JP 59092300 A
- JP 2019007534 A